Europäisches Patentamt

(19) European Patent Office

Office européen des brevets

(11) Publication number: **0 223 441 B1**

# EUROPEAN PATENT SPECIFICATION

(12)

(45) Date of publication of patent specification :
23.01.91 Bulletin 91/04

(51) Int. Cl.⁵ : **B65G 13/071, B65G 47/26**

(21) Application number : **86308303.6**

(22) Date of filing : **24.10.86**

(54) Wide range accumulator conveyor.

Divisional application 89123714.1 filed on 24/10/86.

(30) Priority : **12.11.85 US 796866**

(43) Date of publication of application :
**27.05.87 Bulletin 87/22**

(45) Publication of the grant of the patent :
**23.01.91 Bulletin 91/04**

(84) Designated Contracting States :
**BE DE GB LU NL SE**

(56) References cited :
**EP-A- 0 095 857**
**EP-A- 0 095 858**
**GB-A- 1 500 782**
**US-A- 3 420 355**
**US-A- 4 103 769**
**US-A- 4 109 783**
**US-A- 4 199 056**

(73) Proprietor : **FIGGIE INTERNATIONAL INC.**
**(Delaware Corporation)**
**4420 Sherwin Road**
**Willoughby Ohio 44094 (US)**

(72) Inventor : **Eaton, Daniel T.**
**8704 Four Oaks Court**
**Louisville, Kentucky (US)**
Inventor : **Benningfield, George W.**
**2308 Darrell Drive**
**Louisville, Kentucky (US)**

(74) Representative : **Allen, Oliver John Richard et al**
**Lloyd Wise, Tregear & Co. Norman House**
**105-109 Strand**
**London, WC2R 0AE (GB)**

## Description

This invention relates to accumulator conveyors, and more particularly to fluid controlled and actuated, belt driven, live-roller accumulator conveyors having multiple accumulation zones for accumulation of articles along the conveyor.

In article handling systems, it is frequently necessary to accumulate articles in an article pass line due to a downstream delay, an upstream surge, a desire for temporary storage, or for several other reasons. This has been accomplished in the past, by accumulator conveyors comprising a plurality of accumulation zones. Each zone includes a plurality of load carrying rollers and devices to start and stop rotation of such rollers, independently of the rollers of other zones, in response to control signals.

Typical past accumulator conveyors of this type are illustrated by Eureapean Patent 0095857, which corresponds to the first precharacterising portions of claims 1 and 14, and take the form of belt driven, live-roller accumulation conveyors. In such conveyors, a single, common, drive belt is disposed beneath the rollers of each zone. Selected tension rollers, beneath the belt, are urged upwardly to force the portion of the belt underlying a specific zone against the load carrying rollers to drive them and any articles thereon. The tension rollers of each zone are raised and lowered independently of the tension rollers of other zones and are controlled by article sensors disposed in the zones. The actuators are typically disposed toward sides of the conveyor and lift one end of a tension roller, for example, to raise the belt. Thus, such tension rollers move from an inclined position towards a horizontal position as they are raised.

A fluid, such as compressed air, has been used to lift the tension rollers by means of air cylinders and as well as to provide pneumatic actuating control for such cylinders. For example, in one known conveyor, a normally closed control valve is mechanically held open by a spring, against the normal weight of a signal apparatus and the air pressure therein, thus passing pressurized air to an actuating cylinder to raise the tension rollers and belt in a zone to drive the zone. The control valve is closed upon sensing of an article by a sensing device, which mechanically overcomes the spring to close the valve, vent the cylinders and thus drop out the tension rollers permitting the zone to stop.

While such accumulation conveyors have provided many advantages, they also present a number of problems, not the least of which is versatility. Specifically, it is noted that the load carrying rollers of the various zones are driven by the frictional engagement of the belt against them. The tension rollers must urge the belt against the rollers with a force sufficient to drive them against their inherent inertia and friction, and the loads disposed on them by any articles thereon.

Moreover, such conveyors have relied on the same fluid pressures for actuation control. That is to say that the same fluid used to operate the actuators or cylinders is passed to them through the article operated control valves for each zone and according to the specific control circuit used.

When a normally closed control valve is used in such a conveyor, the force of the spring required to keep the valve in an open condition (so to effect zone drive) is proportional to the fluid pressure within the control valve. The spring must also be strong enough to hold up any sensing apparatus the normal weight of which is opposed by the valve actuating stem. Such sensing apparatus is typically heavy and may even involve use of a sensing roller of the same size and weight as a load carrying roller. Such heavier sensors in turn require heavier springs.

The fluid pressure within the control valve is substantially the same as that used in the actuator cylinders and thus is usually determined as a function of the anticipated conveyor loads. The pressure must be sufficient to cause fluid actuators to raise the tension rollers with enough force to press the belt against the load carrying rollers, causing enough frictional contact to drive the rollers under the anticipated loads.

Such a system substantially reduces the versatility of the accumulator in view of the fact that heavier loads require much greater fluid actuation pressures and resultant higher control pressures than do lighter loads. When an accumulator is set up to handle relatively heavy loads, for example, relatively high fluid pressures are required to initiate and maintain the belt drive contact. This also increases pressure in the control valves when they require more actuating force to operate the valves. When the conveyor is so set up, a light weight article does not possess enough inertia to trip the article sensor in a zone against such high pressures in the associated normally closed control valve. Specifically, the article cannot overcome the spring pressure necessary to hold the normally closed control valve open for zone driving against the relatively high fluid pressures in the valve being passed to the tension roller actuators for lifting the belt with enough force to drive the zones for heavy loads.

When the conveyor is set up for light loads, the air pressure required for effectively raising the tension rollers and belt is relatively light. Accordingly, air pressure in the control valve is also relatively light. Thus, a much lighter spring can be used to hold open the normally closed control valve. A heavy article would have no difficulty in tripping the article sensor against such a lighter spring. Nevertheless, the conveyor may not be able to convey such heavier loads in view of such lighter fluid pressures in the tension roller actuating cylinders, which pressure may not be sufficient to drive the belt with sufficient force against the load carrying rollers for moving the heavier load.

A typical complicating factor in such conveyors is the actual construction of the load sensors themselves, some of which are at great mechanical disadvantage with respect to sensed load pressures in view of the normally-closed control valves used. Moreover, many load sensors utilize roller and other structures having a great deal of internal friction and inertia which must be overcome by sensed articles. This detracts from the effective operational force conveyed articles can exert on the control valves, and at the same time requires increased drive actuator pressures. As noted herein, increased drive actuator pressures increase the fluid pressure in the control valves and even heavier balance springs are required to hold them open. This requires still greater article generated actuating forces and illustrates the compounding deleterious effect of undesirable friction inertia and overall poor mechanical advantage of the sensor device.

As in EP 0095857, there is provided by the present invention an accumulator conveyor for selectively conveying and accumulating articles therealong having a plurality of accumulation zones defining a common article pass line, each zone having means for conveying articles along the pass line, means for selectively actuating the conveying means in the respective zone and means for detecting the presence of a load in the respective zone which comprises a sensing member extending upward into the plane of the conveyor defined by the pass line so as to intercept articles being conveyed in the respective zone and a fluid valve means actuated by the sensing member as the latter is deflected by a said article, said fluid valve means comprising a valve which is held open for fluid flow therethrough and is closed against fluid flow for controlling the actuating means to selectively actuate and de-actuate the conveyor in response to the sensing of an article by the sensing member, said actuating means and said fluid valve means forming part of a respective fluid control means operable from a common pressurised fluid source and being selectively operable at a single predetermined, common fluid supply pressure to convey and to accumulate a plurality of discrete articles. The present invention is characterised in that the said fluid valve means comprise a normally-open valve which is open in non-activated condition by the pressure of the fluid flowing through the valve and is closed against fluid flow when activated for controlling the said actuating means to selectively actuate and de-actuate the conveying means at least partially in response to the sensing of articles at predetermined locations in the pass line and the sensing member has a mechanical advantage of at least 2 :1 with respect to the operation of the normally-open valve whereby the conveyor is operable to convey discrete articles having a weight range of the lightest to the heaviest article of at least 0.45 Kg (1 lb) to 45 Kg (100 lbs).

The present invention also relates to a method of selectively conveying and accumulating a plurality of discrete articles, as defined by independent claim 14.

Such a conveyor is capable of handling a wide range of both heavy and light loads at a constant fluid pressure without adjustment.

In such a conveyor, fluid pressure flowing through the valve serves to retain the valve in a normally open condition and fluid passes to the tension roller actuating cylinders to effectuate driving of the associated zone. It is not necessary to use any external or load balancing spring to hold the valve open since the normal fluid pressure flowing through the valve serves this purpose

Preferably an article sensor is provided in each zone having two light-weight, curved brackets, each secured to a nylon bearing supported pivot shaft at one bracket end upstream of a load carrying roller and extending beneath the roller and upwardly on its downstream side into an article pass line plane. A light-weight sensor roller comprising a relatively small diameter axle rod and a synthetic material roller rotatable thereon is connected between the upwardly extending bracket ends for engagement by any article moving along the conveyor pass line in the zone. A normally open control valve is mounted at the side of the conveyor and a control valve stem actuating paddle is mounted on the pivot shaft for engaging and depressing the stem and closing the normally open valve against the fluid pressure flowing therethrough. Preferably, the straight line distance between the end of the brackets at the sensor roller and the pivot shaft axis is about twice or more the straight line distance between the pivot shaft axis and the point of engagement of the stem actuating paddle and the valve stem. This is made possible by the light-weight, curved brackets and provides a substantial effective mechanical advantage within the sensor over the control valve.

Zone tension rollers mounted centrally in the conveyor are preferably actuated by a centrally mounted fluid actuator, lifting the rollers horizontally and uniformly when actuated to present the belt horizontally and uniformly against the load carrying rollers of the zone and with no side-to-side inclination. The tension rollers are mounted on brackets secured to a pivot shaft and the fluid actuator drives a drive paddle, also secured to a shaft to rotate it and lift the tension rollers. The mechanical advantage of the actuator over the tension rollers, as provided by the drive paddle, shaft, and brackets, is also at least about 2 and maximizes the effectiveness of the actuator for a given actuation pressure.

Moreover, the preferred conveyor provides several other aspects of mechanical advantage over the entire conveying apparatus. For example, the use of very light-weight synthetic material as a rotatable sensor roller permits articles to roll over the sensor with little friction or other force opposition, thus not requiring increased drive force to move the articles. Also, the use of centrally mounted actuators and uniformly, horizontally-lifted tension rollers and belts maximizes the effectiveness of drive pressures exerted on the load carrying rollers for any given actuator pressure.

The commonly connected fluid control and actuating circuits are supplied by a single source of fluid pressure, such as compressed air. This pressure is controllably regulated, thus permitting the extensive versatile capacity range of the conveyor to be shifted up and down to accommodate a specific range of article weights.

While the normally open valve or the high mechanical advantage article sensor can be used independently to advantage in increasing the versatility of accumulator conveyor systems, the combination of them as described provides an accumulator conveyor of substantial load versatility. For example, a belt driven, live-roller, accumulator conveyor is capable of handling loads of about 45 Kg (100 pounds) in weight down to loads of about 0.45 Kg (1 pound) or less in weight, all without any adjustment to the fluid control and actuating pressure of about $2.8 \times 10^5$ Newtons/m² (40 psi). Loads of from about 45 to 135 Kg (100 to about 300 pounds) can be conveyed and accumulated on the same conveyor without any adjustment or change except an increase in this pressure. The load versatility is also enhanced by the other mechanical advantages provided as noted.

The versatility of the conveyor according to the invention was demonstrated when a needle nose pliers, weighing less than 0.45 Kg (1 pound) was accidentally dropped on the conveyor being tested to accumulate and convey articles in the range of 18 and 22.5 Kg (40 and 50 pounds) to about 45 Kg (100 pounds). As the pliers were conveyed along the conveyor, they tripped the sensors, causing the zones to operate the same for them in accumulation and conveying as for the much heavier articles noted.

The invention will now be described, by way of example, with reference to the accompanying drawings, in which :

Figure 1 is a diagrammatic illustrative sketch showing a conveyor in accordance with present invention, in one transient stage of accumulation,
Figure 2 is a schematic illustrating a control and actuating circuit for the conveyor of figure 1,
Figure 3 is an elevational view in partial cross-section of an accumulation zone of the conveyor of figure 1, and
Figure 4 is a plan view of the portion of the accumulation zone shown in figure 3.

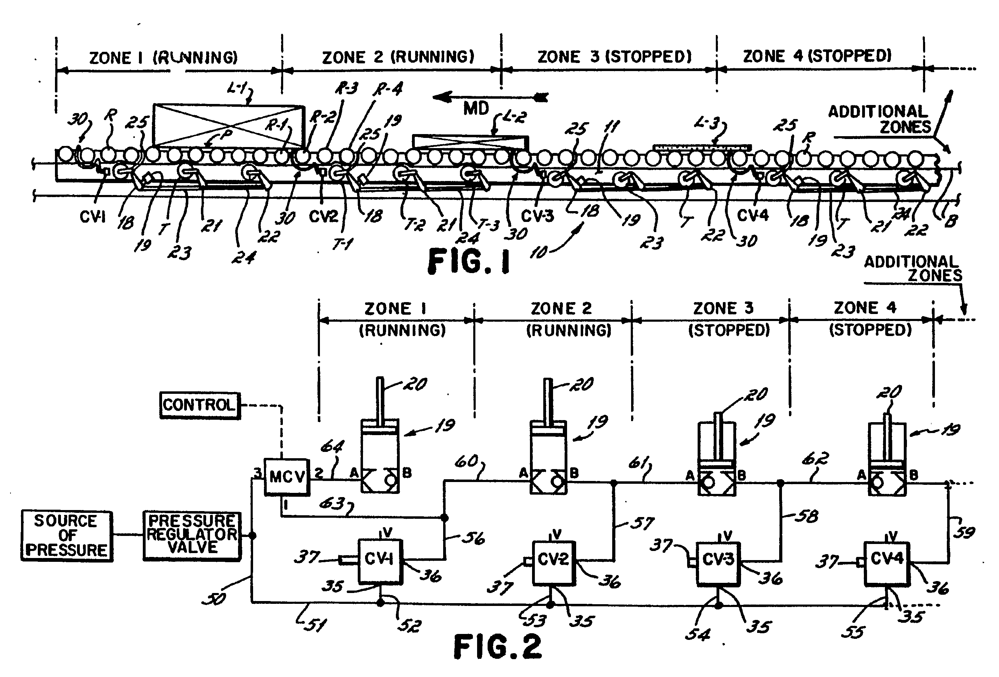

Turning now to the drawings, there is shown in figure 1 an accumulator conveyor 10 having a discharge zone 1 and a plurality of accumulation zones identified as zone 2, zone 3 and zone 4. Optional additional zones are referred to in the drawing but are not shown. The conveyor 10 is capable of conveying and accumulating various loads thereon, such as by way of example, loads L-1, L-2 and L-3.

It should be appreciated that the depiction of the conveyor 10 in figure 1 shows the conveyor in an illustrative transient condition only for the purpose of describing the conveyor structure and general overall operation. Many other configurations of article sizes, article disposition on the conveyor, and transient conditions are possible.

Each of the zones inlcudes a plurality of load carrying rollers designated by the letter R, with certain of the rollers designated as R-1 through R-4, as seen with respect to zone 2 for purposes of description.

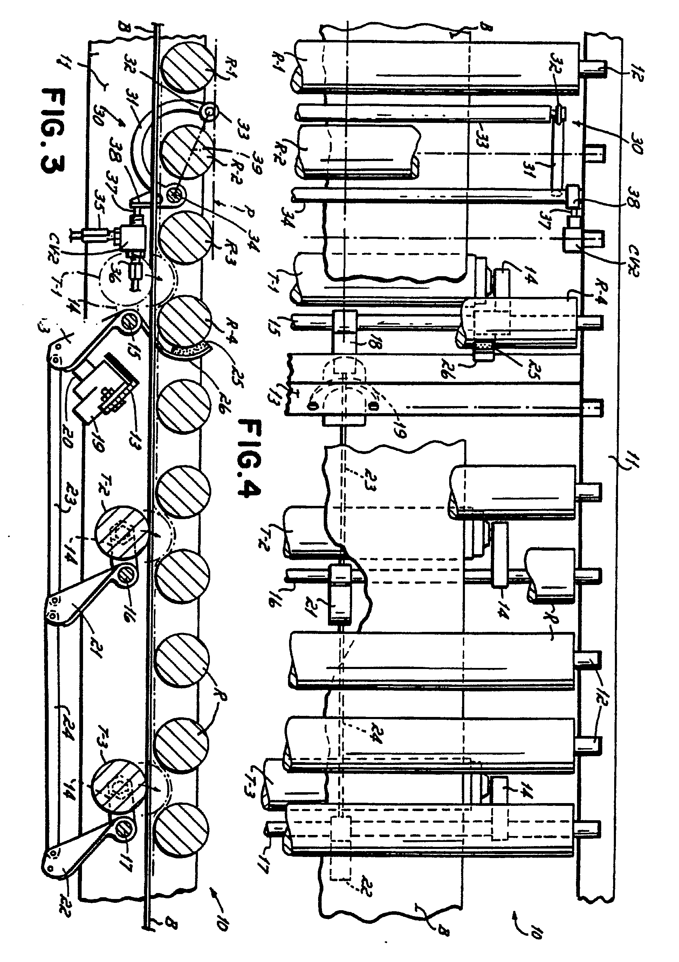

Figure 3 and 4 depict elevational and plan view of a single zone, such as zone 2, where further details of the conveyor are better seen. Other accumulation zones at the discharge zone are similar unless otherwise stated.

The conveyor 10 includes a plurality of channel-shaped side rails 11 (one of which is not shown), mounted in parallel disposition. A plurality of roller shafts 12, on which the various rollers are mounted for rotation, are disposed in parallel between the side rails 11. Preferably, the roller shafts 12 simply lie in slots in the side rails 11 of the conveyor such that the load carrying rollers can be moved upwardly off the conveyor if desired. The conveyor 10 further included at least one cross tie member 13 extending between the side rail 11 and the opposite side rail (not shown).

A plurality of tension rollers T are provided in each zone, with tension rollers T-1, T-2 and T-3 being shown in zone 2. A single common drive belt B is disposed in the conveyor between the lower surfaces of the load carrying rollers R and the upper surfaces of the tension rollers T. It will be appreciated that the belt is provided with appropriate drive and take-up or tensioning means (not shown) for driving (and adjusting the tension of) the belt in a direction opposite to the machine direction arrow MD as shown in figure 1. This motion of the belt tends to rotate the rollers R of the conveyor in a direction of rotation so as to convey loads in the machine direction, as indicated by the arrow MD in figure 1.

Each of the tension rollers T are mounted on tension roller brackets 14 which are themselves secured to tension roller pivot shafts 15, 16 and 17, as shown in Figs. 3 and 4.

When the pivot shafts 15, 16 and 17 of each zone are rotated in a clockwise direction, they serve to move the brackets 14 and thus uniformly raise or lift the tension rollers in parallel, horizontal disposition to the dotted line positions as shown in Fig. 3. This urges the belt B toward its dotted line position (Fig. 3) for full belt contact against the underside of the load carrying rollers in the zone to thereby drive the zone. The dotted line position of belt B is exaggerated in the figures for illustrative purposes and the actual belt path may not be quite so curved over the tension rollers.

When the tension rollers are lowered or dropped out, such as by counterclockwise rotation of the shafts 15, 16 and 17, the belt in the zone is lowered to its solid line position as shown in Fig. 3. In this lowered position, the belt B is out of engagement with the load carrying rollers of the zone and thus the zone is deactivated and not driven.

Further describing the tension roller construction of the conveyor zones, a drive paddle 18 is secured to the pivot shaft 15 such that when the drive paddle 18 is rotated, it imparts rotation to the shaft 15 and to the brackets 14. Attached to cross tie 13 is a fluid driven actuator 19, comprising a fluid driven, extensible piston 20, positioned to engage the drive paddle 18 such that upon extension of the piston 20, the drive paddle is urged in a clockwise direction. Upon retraction of the piston 20, the drive paddle is permitted to rotate in a counter-clockwise direction, and is so urged by the weight of at least tension roller T-1. Accordingly, the extension of the piston 20 caused by fluid pressurization of the actuator 19, causes the drive paddle 18 and the pivot shaft 15 to rotate in a clockwise direction, thus raising the tension roller T-1 and urging the belt B upwardly against the rollers R-3, R-4 and other adjacent rollers in the zone.

Similarly, tension rollers T-2 and T-3 of each zone are mounted on the respective roller pivot shafts 16 and 17. Secured to the shafts 16, 17 are further drive paddles 21, 22, respectively, such that rotation of the drive paddles 21, 22 rotates respective pivot shafts 16, 17 and thus raises tension rollers T-2 and T-3 beneath the belt B to urge the belt B into engagement with further rollers R in the zone. This action drives the load carrying rollers so as to drive any loads thereon along a pass line plane P (as identified in Fig. 3) in the direction MD.

The drive paddles 18, 21 and 22 are interconnected by links 23 and 24. Accordingly, clockwise rotation of drive paddle 18 by extension of the piston 20 (shown in retracted condition in Fig. 3) serves to rotate not only the drive paddle 18, but the interconnected drive paddles 21 and 22 in a clockwise direction, thus rotating the shafts 15, 16 and 17 and raising all tension rollers T-1, T-2 and T-3 in the zone at the same time. Accordingly, and for purposes of description, the entire fluid actuator 19 and the drive paddles, associated pivot shafts and tension rollers in each zone are sometimes referred to collectively as fluid actuation means.

It will be noted that the distance between the point of engagement of the piston 20 of actuator 19 with drive paddle 18 to the axis of pivot shaft 15 is about twice the distance between the same axis and the axis of rotation of the tension roller. This provides a mechanical advantage in the drive of about 2, thus maximizing the effectiveness of the actuator 19 for a given actuation fluid pressure. Moreover, it should be appreciated that the drive advantage of tension rollers T-2 and T-3 is even greater due to the longer moment arm between the axis of shafts 16 and 17 and the engagement of links 23, 24 with drive paddles 21, 22, respectively. This further enhances drive pressures generated by the actuator 19 for a given actuator fluid pressure.

With further reference to figures 3 and 4, a zone brake comprising a brake shoe 25 and a brake arm 26 is also mounted on the pivot shaft 15 for engagement with the roller R-4 upon retraction of the piston 20. A second brake shoe (not shown) may also be mounted on shaft 15 on the opposite side of the belt. Such retraction, when the actuator 19 is vented, permits the shaft 15 to rotate in a counterclockwise direction. In this function, when the actuator 19 is deactivated, the weight of the tension roller T-1, together with downward forces exerted on roller T-1 due to the adjusted tension on the drive belt and the weight of the belt, tends to rotate the pivot shaft 15 in a counterclockwise direction, lowering the belt B on the tension rollers away from the load carrying rollers and at the same time urging the brake arm 26 and the brake shoe 25 toward and into engagement with the roller R-4, thus frictionally braking that roller and any load which may reside thereon.

It will be appreciated that the brake, including the shoe 25 and arm 26, is disposed on the upstream side of the roller R-4 and extends preferably to just below the pass line plane P, as shown in figure 3. It will also be appreciated that when the piston 20 of the actuator 19 is retracted, each of the tension rollers T-1, T-2 and T-3 are free to rotate downwardly or in a counterclockwise direction. The weight of each (and belt pressure thereon) is interconnected through the links 23 and 24 and serves to increase the frictional braking pressure exerted by the brake 25 against the roller R-4.

Figs. 3 and 4 also depict an article sensing means and a control valve for each zone. The article sensing means 30 preferably includes two curved brackets 31 (one not shown), each having an upper end at 32. The two curved brackets are disposed one on each side of the conveyor, within the side rails 11, and are mounted on a pivot shaft 34, which has ends mounted in nylon bearings at the conveyor sides to reduce rotating friction.

The curved brackets 31 extend from the pivot shaft 34 beneath the load carrying roller R-2 and then extend upwardly between the rollers R-1, and R-2 into a position adjacent or within the pass line plane P, as shown in Fig. 3. An axle of small diameter, about 6.5 mm ($\frac{1}{4}$") (not referenced) is mounted between the ends 32 of the brackets 31 and a light-weight sensor roller 33 is rotatably disposed on the axle within or above the pass line plane P so as to be engaged by articles moving down the conveyor. Sensor roller 33 is preferably made from a light-weight synthetic material such as polystyrene.

A normally open control valve is provided within each zone, with each respective identical control valve referred to as CV-1, CV-2, CV-3 and CV-4, respectively. Figure 3 depicts a control valve CV-2 shown mounted on the side rail 11 of the conveyor in zone 2. The control valve CV-2 is a normally open valve having an input 35 directly connected to a source of pressurized fluid, and an output 36 connected to the actuators 19, as will be described.

The control valves are all constructed as normally open valves and each has an extending valve actuating stem 37 which can be depressed to close the normally open valve. In a normal condition, the stem 37 is held in an extended position by air flowing through the open control valve CV-2. Depression of the stem 37 causes the control valve to close, thereby cutting off pressurized fluid present at input 35, from passage through the valve to output 36.

Also secured to the pivot shaft 34 is a control valve stem actuating paddle 38 which rotates upon rotation of shaft 34. Accordingly, it will be appreciated that when the sensor roller 33 is engaged by an article moving down the pass line P of the conveyor, the curved brackets 31 are depressed to rotate the shaft 34 in a counterclockwise direction. This motion moves the stem actuating paddle 38 in a counterclockwise direction, thereby depressing the stem 37 and closing the respective control valve.

It will be appreciated that the sensing means 30 provides a significant mechanical advantage of the article over the control valve. Specifically, it will be appreciated that a straight line 39, extending from approximately the end 32 of the bracket 31 to the axis of the pivot shaft 34, is about twice the distance from that same axis to the point of engagement of the actuating paddle 38 with the stem 37. This provides a mechanical advantage of about 2 with respect to the article over the control valve. Obviously, other constructions could be provided of substantially more mechanical advantage to further facilitate actuation of the control valve, or of less mechanical advantage depending on the parameters desired. In any event, it is unnecessary to overcome any external spring pressure as in a system using a normally closed valve. The only valve actuating pressure required is that necessary to close the normally open valve against the pressure of air flowing therethrough (and a small amount of pressure to overcome any internal spring bias of the plunger toward its open position). And that required pressure may vary substantially depending on specific valve construction, it being preferable to select a normally open control valve having the operational capacity to handle the fluid pressure necessary for the tension roller actuators in view of the expected loads, but a control stem extension force caused by such pressure sufficient only to extend the sensing means 30 into the conveyor pass line. As an example, in a prototype capable of handling packages of from about 0.45 Kg (1 pound) or less to about 135 Kg (300 pounds), a control valve Model No. MJVO-3, a two-position, three-way, normally open valve produced by Clippard Instrument Laboratory, Inc. of Cincinnati, Ohio has been found suitable. Such a valve is capable of handling the actuating pressures of about $2.8 \times 10^5$ Newtons/m² (40 psi) as noted herein for anticipated article loads of from less than about 0.45 Kg (1 pound) up to about 45 Kg (100 pounds). The valve is also capable of handling increased control pressures of about $4.1 \times 10^5$ Newtons/m² (60 psi) (for example) required for article loads up to about 135 Kg (300 pounds).

This specific valve includes an internal valve spring providing a relatively weak force to extend the valve stem to a normally open position when the valve stem is not loaded by extraneous forces. The internal spring is a standard item in such a preferred valve, but is not strong enough to extend the plunger against the inherent weight of the article sensor of the invention described herein, even when there is no article load on the sensor. The preferred sensor and valve apparatus then is preferably designed for operation despite the existence or non-existence of such spring, and such spring does not comprise a load balance spring with respect to either sensor weight or fluid flow pressure in the valve.

Other normally open type valves may suffice.

Turning now to Fig. 2, the control and actuation circuit of the conveyor will be described. As shown in Fig. 2, a source of fluid pressure, such as a source of compressed air, is provided and is regulated by a pressure regulator valve connected to a supply manifold 50. Supply manifold 50 is connected to a pressure line or manifold 51 which is interconnected through lines 52, 53, 54 and 55, respectively, to the input port 35 of each control valve CV-1 through CV-4. Each control valve has a vent, marked V in the drawing, and a pressurized fluid output 36 connected to respective lines 56, 57, 58 and 59. In the zones 2 through 4, the actuators 19 are provided with two input ports A and B and a shuttle ball for sealing off one of the two input ports. In zone 1, which is the discharge zone, the actuator 19 may also have two ports A and B provided with a shuttle ball, however, port B is vented or is closed preferably as shown. Alternatively, port B of the actuator 19 in zone 1 could be connected to the line 60. In zones 2 and 3, port B of the respective actuators 19 are connected through the respective lines 61 and 62 to the A ports of the immediate upstream actuators. Port B of the actuator 19 in zone 4 is connected only to line 59 and control valve CV-4, or to a port A of another actuator 19 in an optional upstream zone (not shown).

The specific actuator 19 preferred for use constitutes a 13 mm ($\frac{1}{2}$") stroke air clamp, Model No. 101S, produced by the EVEI Development Co. Inc. of Jeffersontown, Kentucky. Such an actuator comprises an extensible piston, fluid driven cylinder, combined with an integral shuttle valve, as shown schematically in Fig. 2, and connected together as shown in the drawing and described above. The extensible pistons 20 of each actuator are extended to engage the drive paddles 18 in each of the respective zones 1-4.

Continuing further with a description of the control and actuation of Fig. 2, manifold 50 in addition to its connection to line 51 is connected to an input port 3 of a master control valve MCV. The master control valve has also an input port 1 and an output port 2 and can be controlled by any desirable means to selectively connect either the input port 3 with the output port 2, or the input port 1 with the output port 2.

When input port 3 of the master control valve MCV is connected to the output port 2, fluid such as compressed air flows from the source of pressure through the pressure regulator valve, into the manifold 50, through the master control valve, ports 3 and 2, to port A of the actuator 19 in zone 1. Such pressurized air is operable to extend the piston 20 in zone to continuously engage the drive paddle 18 of zone 1 and thereby elevate the tension rollers of that zone upwardly so as to press the belt B against the load carrying rollers of that zone and thus continuously drive the zone to move loads thereon in the direction of the arrow MD (Fig. 1), despite the condition of control valve CV-1 in zone 1.

When the MCV valve is controlled to connect input port 1 to input port 2, the actuator 19 of zone 1 is effectively connected to the control valve CV-1 for that zone through lines 56, 63 and 64. In this mode, the zone 1 will be actuated or driven only when the sensor 30 is extended into the pass line P. When the sensor 30 is depressed, the normally open valve CV-1 will be closed to vent the actuator 19 in zone 1, deactivating the zone.

Operation of the conveyor will now be described with reference to the varying loads L-1, L-2 and L-3 thereon, as shown in Fig. 1, and the position of the respective components as shown in Fig. 2. First, however, it will be appreciated that for zones 2, 3 and 4 the actuators 19 can be extended so as to drive the tension rollers upwardly and thus drive the zones when ever the control valve in the zone, or the control valve in the preceding downstream zone has its plunger 37 extended. This could occur whenever two respective loads have not depressed both the sensor 30 of the zone and of the downstream zone, respectively. For example, the actuator 19 of zone 2 is operated to extend piston 20 when pressure is presented to the actuator through either port A from control valve CV-1 or through port B from control valve CV-2. Accordingly, zone 2, for example, will be activated to drive any loads thereon when either valve CV-1 or CV-2 is in its normally open condition. Likewise, and for example, zone 3 could be activated upon the presence of any pressure at either port A, through control valve CV-2 or port B through control valve CV-3.

Looking now at the specific condition of the conveyor as shown in Figs. 1 and 2, it will be appreciated that the master control valve MCV is positioned so as to connect input port 3 with output port 2, thus pressurizing the line 64 and port A of actuator 19 so as to constantly extend the piston 20 thereof regardless of the condition of the control valve CV-1. This insures continuous operation of the conveyor in a singulation mode, i.e., a mode wherein operation of zones 2 through 4 by the described control serves to separate loads discharging into and from zone 1.

As shown in Figs. 1 and 2, a load L-1 has substantially traversed zone 1, but still remains partially on the sensor 30 of zone 2. This depresses the stem 37 of the control valve CV-2 to move the valve from its normally open to a closed position, thereby venting, through the vent V, any pressure in lines 61, 57, and output 36. At the same time, the control valve CV-1 remains normally open since the load L-1 has not reached the sensor 30 of the discharge zone 1. (Even if the sensor 30 of zone 1 were depressed, that zone would still run due to the override of the master control valve over valve CV-1.)

In this condition, then, the control valve CV-1 is operable to pass pressure from the manifold line 51 through its output 36 and lines 56 and 60 to port A of the actuator 19 of zone 2. This pressure extends the piston 20 so as to drive the drive paddle 18 for the tension rollers T-1 through T-3 in zone 2 and thereby lift all the tension rollers in that zone as heretofore described so as to drive zone 2.

Moving upstream, a load L-2 has substantially traversed zone 3, but still remains on the actuator for zone 3. This depresses the stem 37 of the control valve CV-3 and vents lines 58 and 62. At the same time, the load L-1 has not cleared the sensor 30 of zone 2, thereby also causing depression of the stem 37 of the control valve CV-2 which causes the valve to vent lines 57 and 61. Accordingly, no pressure is directed to the actuator 19 of zone 3 and the piston 20 can be retracted. This permits the drive paddle 18 to move in a counterclockwise direction in zone 3, thereby dropping out the tension roller in that zone and all the commonly connected tension rollers. It will be appreciated that the weight of the tension rollers, combined with forces exerted by the belt, depresses piston 20 of actuator 19 in the zone.

Moving still further upstream, it will also be appreciated that a load L-3 has moved substantially through zone 4, but still depresses the sensor 30 of zone 4. Accordingly, the stem 37 of the control valve CV-4 is depressed, venting any pressure in the line. At the same time, since the load L-2 has not cleared the sensor 30 of zone 3, lines 58 and 62 remain vented and no pressure is available at the actuator 19 of zone 4. Thus, zone 4 tension rollers are dropped out and the zone is disengaged. Accordingly, in the condition as shown in Fig. 1, zones 1 and 2 are running or activated while zones 3 and 4 are temporarily stopped or deactivated. Load L-3 on the stopped conveyor zones 3 and 4 is thus accumulated and spread out from other loads. It will not be moved until zone 3 is again activated. This insures the loads are spaced or "singulated" as they move along the zones.

As soon as the load L-1 clears the sensor 30 in zone 2, air pressure in the control valve CV-2 will serve to extend the piston 37 against the freed sensor in that zone, lifting it, and the control valve CV-2 will return to its normal open condition, thereby pressurizing output 36, and lines 57 and 61. This will insure the engagement, through pressure exerted on port A of the actuator 19 in zone 3, so that the actuator will operate the tension rollers to lift the belt into engagement with the rollers R in zone 3. This will drive the load L-3 deeper into zone 3. Once the load L-3 clears the sensor 30 of zone 4, the control valve CV-4 will extend to its normal condition, thereby pressurizing its output 36, line 59 and port B of the actuator 19 in zone 4. This will drive zone 4 to convey any further packages received from either an upstream conveyor or an upstream accumulator conveyor or zone as appropriate.

Accordingly, it will be appreciated that the operation of any of the zones is contingent upon the condition of the immediate downstream zone as well as the condition of the zone in question.

When it is necessary to fully accumulate loads on the conveyor, a load stop is provided in the pass line P of the conveyor so as to stop an article over the sensor 30 of zone 1. At the same time, the master control valve is operated to connect the input port 1 with output port 2 such that any pressure to extend the piston 20 of the actuator 19 of the discharge zone 1 must be obtained through the control valve CV-1. Since any load on zone 1 under that condition, however, depresses the stem 37 of the control valve CV-1, there will not be any pressure and that zone will remain disengaged until the package is manually moved from the conveyor or the master control valve is switched to connect port 3 with port 2. At the same time a package stop, for example, is removed.

Also, it will be appreciated that as soon as the tension rollers of any zone are dropped out by virtue of the above described operation, the brake shoe 25 and brake arm 26 is rotated by counterclockwise rotation of the shaft 15 in each zone so as to brake a roller such as roller R-4 in zone 2. This prevents any load from coasting through the zone onto the next zone. Of course, it will be appreciated that the sensors and the brake can be disposed in various positions throughout the respective zone so as to achieve any desired braking function. Moreover, it will be appreciated that the weight of the tension rollers, coupled with forces exerted by the tensioned drive belt, serves to provide adequate braking pressures.

Thus, an article accumulates in zone 1, which stops, a following article moves through zone 2 to its sensor, deactivating and braking the zone, a further article moves into zone 3, stopping and braking it, and so on, upstream of the conveyor. The articles thus accumulate in a "zero-pressure" mode without exerting significant pressure on each other.

It will also be appreciated that loads L-1, L-2 and L-3 vary substantially in dimension and in weight. The conveyor 10 is capable of handling loads, such as load L-1, at approximately 45 Kg (100 pounds) and as well is capable of handling much lighter loads such as load L-3 which may be much smaller in dimension and weigh as little as 0.45 Kg (1 pound) or less. Also, the conveyor 10 is capable of handling intermediate weight (between 0.45 and 45 Kg) (1 and 100 pounds) and dimension loads, such as load L-2 as shown in Fig. 1.

Conveying and accumulating of articles in this range can be accomplished upon a control and actuating pressure of about $2.8 \times 10^5$ Newtons/m$^2$ (40 psi) and without any adjustment. Loads above 45 Kg (100 pounds) to about 135 Kg (300 pounds) are conveyed and accumulated in the same way by virtue of making only an adjustment to the control and actuating pressure, through preferably a single adjustable pressure regulator, and with no other adjustment to the apparatus, control valves or actuators therefor.

It will also be appreciated that the significant mechanical advantage provided by the sensor 30 enables the depression and actuation of the control valves in each zone by articles varying widely in weight, as mentioned. The combination of the mechanical advantage, together with the utilization of the normally open valve (as opposed to a normally closed valve which is mechanically held open until actuated for closing), is believed to provide this desirable function. While it may be possible to achieve some broadening of a load range in an accumulator conveyor by the mere use of the improved mechanical advantage sensor 30, or by the use of normally open control valve as described herein, a combination of these two components provides an even more beneficial and improved result, enabling the conveyor to handle packages of widely varying weight characteristics without any adjustment of the air pressure.

While the mechanical advantage of the sensor, roller and bracket apparatus has been described, it should also be appreciated that it is obtained without interference from the load carrying rollers, due to use of the curved brackets extending from behind and beneath one load carrying roller to the front thereof. Accordingly, this advantage can be provided in conveyors independent of the load carrying roller centers.

Also, it should be appreciated that the conveyor 10 incorporates several other mechanical advantages, in addition to that provided by the effective movement arms of the sensor brackets and valve stem actuating paddle. Use of a rotatable synthetic sensor roller reduces frictional forces which must be overcome as the article trips and rides over the sensor. Central disposition of the tension rollers, coupled with the centrally disposed actuator and uniform, parallel and horizontal lifting motion by them, insures full drive belt contact with the load carrying rollers to maximize the drive force imparted for any given actuator pressure, thus most efficiently using the predetermined control and actuator fluid pressure to handle heavier loads.

Still further, the significant mechanical advantage provided by the actuators over the tension rollers through the respective drive paddles 21, 22 and interconnecting links 23, 24, further enhances the capacity of the actuators for a given fluid actuation pressure, thereby increasing drive pressures and serving to broaden the effective load range of the conveyor for a given fluid control and actuating pressure.

It should also be appreciated that the conveyor 10 has been described with respect to handling loads which vary from about 0.45 Kg (1 pound) or less up to about 45 Kg (100 pounds). Adjustment of the air pressure through the pressure regulator valve, for example, enables the conveyor to handle a similarly wide range of loads, but in higher magnitude, such as loads up to about 135 Kg (300 pounds), as noted, and with no other adjustment.

Accordingly, the accumulator conveyor 10 is capable of handling widely varying load weights, including loads of weights varying from about 0.45 Kg (1 pound) or less up to about 45 Kg (100 pounds), all without any pressure adjustment, even though the same pressure is utilized for both fluid control and fluid actuation of the respective zones of the conveyor. Loads of up to 135 Kg (300 pounds) can be handled in the same way with only adjustment of the common control and actuating pressure being necessary. No different control valves or actuators are required. The conveyor 10 also provides an improved brake, actuated in part by the weight of all dropped out tension rollers in a zone.

## Claims

1. An accumulator conveyor for selectively conveying and accumulating articles therealong having a plurality of accumulation zones defining a common article pass line, each zone having means for conveying articles along the pass line, means for selectively actuating the conveying means in the respective zone and means for detecting the presence of a load in the respective zone which comprises a sensing member extending upward into the plane of the conveyor defined by the pass line so as to intercept articles being conveyed in the respective zone and a fluid valve means actuated by the sensing member as the latter is deflected by a said article, said fluid valve means comprising a valve which is held open for fluid flow therethrough and is closed against fluid flow for controlling the actuating means to selectively actuate and de-actuate the conveyor in response to the sensing of an article by the sensing member, said actuating means and said fluid valve means forming part of a respective fluid control means operable from a common pressurised fluid source and being selectively operable at a single, predetermined, common fluid supply pressure to convey and to accumulate a plurality of discrete articles, characterised in that the said fluid valve means comprise a normally-open valve (CV) which is open in non-activated condition by the pressure of the fluid flowing through the valve and is closed against fluid flow when activated for controlling the said actuating means (18, 19, T1 to T3) to selectively actuate and de-actuate the conveying means (10) at least partially in response to the sensing of articles at predetermined locations in the pass line and the sensing member has a mechanical advantage of at least 2 :1 with respect to the operation of the normally-open valve (CV) whereby the conveyor is operable to convey discrete articles having a weight range of the lightest to the heaviest article of at least 0.45 Kg (1 lb) to 45 Kg (100 lbs).

2. An accumulator conveyor according to Claim 1 further including braking means (25, 26) in each zone also actuated by said common fluid pressure system (51), said conveying means, actuating means and normally-open valve co-operating with said braking means in each said zone to accumulate articles along the conveyor when the latter is in a zero-pressure mode.

3. An accumulator conveyor according to Claim 1 or Claim 2 wherein said normally-open valve (CV) has a predetermined system inertia generated in part by said common fluid pressure and wherein the normally-open valve is operated by each of the discrete articles regardless of its weight against the respective inertia.

4. An accumulator conveyor according to Claim 3 wherein said common fluid pressure is a function of the weight of the heaviest article conveyed and accumulated.

5. An accumulator conveyor as in Claim 1 wherein said conveyor is a live-roller accumulating brake conveyor having a drive belt B, a plurality of belt driven, load carrying, rollers R disposed in a plurality of selectively driven and braked accumulation zones (Zone 1, Zone 2, Zone 3, etc.) defining the common article pass line, tension rollers (T1, T2, T3) for selectively urging said belt into engagement with load carrying rollers of respective zones, fluid control means and brake means (18, 19, 25) in each zone for selectively engaging at least a load carrying roller in each zone ; and

integrated fluid circuit means (Fig. 2) operating on a common fluid pressure from the pressurized fluid source and operatively interconnecting said fluid control valves and said fluid driven actuator means ;

said actuating means in each zone for selectively urging said belt into engagement with load carrying rollers in the respective zone, when said fluid control valve CV in the zone is normally open ;

said sensing member comprising a curved bracket 31 mounted on a pivot shaft 34 between two load carrying rollers and extending from said pivot shaft between the two load carrying rollers, around one of said rollers, and upwardly into said pass line from beneath said one load carrying roller, there being a paddle 38 mounted on said pivot shaft for operably engaging said normally open fluid control valve and closing said valve when an article in said pass line rotates said bracket and said shaft, the bracket, pivot shaft and paddle providing a mechanical advantage of at least 2 with respect to operation of said valve by said article.

6. A conveyor according to any preceding claim, including pressure regulator means for adjusting the pressure of fluid passed to both the normally open valve means and the actuating means of said accumulation zones.

7. A conveyor according to Claim 5 or Claim 6 when appendant to Claim 5 wherein the actuating means includes a second pivot shaft 15, at least one tension roller support bracket 14 mounted on said second pivot shaft, a tension roller T mounted on said bracket, a fluid driven actuator 19 operably mounted for selectively rotating said second shaft in a rotational direction to urge said tension roller against said belt and toward a live-roller, and for selectively permitting rotation of said second shaft in an opposite rotational direction to relieve contact of said belt with said live-roller.

8. A conveyor according to Claim 7, further including a first drive paddle 18 mounted on said second pivot shaft for rotating said second pivot shaft and wherein said fluid driven actuator includes a selectively extensible piston 20 disposed to engage and rotate said first drive paddle and to rotate said second pivot shaft.

9. A conveyor according to Claim 7 or Claim 8, further including a brake arm 26 mounted on said second pivot shaft for engaging and braking a live-roller when said actuator is operated to permit rotation of said second pivot shaft in said opposite rotational direction.

10. A conveyor according to Claim 8 or Claim 9 when appendant to Claim 8, wherein said fluid actuation means in each zone further includes a plurality of second pivot shafts 15, 16, 17 having drive paddles 18, 21, 22 and belt tension roller support brackets 14 thereon, and belt tension rollers T1, T2, T3 operably mounted on said brackets, and further including link means 23, 24 commonly connecting said plurality of drive paddles with said first drive paddle.

11. A conveyor according to Claim 7 or any claim appendant thereto wherein said fluid actuator includes an integral shuttle valve having two input ports (A and B) and being operably connected to an extensible piston.

12. A conveyor according to Claim 9 or any claim appendant thereto wherein the distance from the point of engagement of said fluid actuator with said drive paddle to an axis of rotation of said second pivot shaft is about twice the distance from said axis of rotation of said second pivot shaft to the axis of rotation of said tension roller.

13. A conveyor according to Claim 12 when appendant to Claim 10 wherein the distance between the attachment of each said link means (23, 24) to a drive paddle, respectively, and the axis of rotation of a respective second pivot shaft, is at least about twice the distance from the respective second pivot shaft rotation axis, to a respective axis of rotation of a respective belt tension roller.

14. A method of selectively conveying and accumulating a plurality of discrete articles in an accumulator conveyor of the type having a plurality of accumulation zones defining a common article pass line, each zone having means for conveying articles, means for selectively actuating the conveying means in the respective zone, and means for detecting the presence of a load in the respective zone which comprises a sensing member and a fluid actuated valve means, the sensing member extending into the plane defined by the pass line so as to intercept articles being conveyed in the respective zone and the fluid valve means actuated by the sensing member as the latter is deflected by a said article, said fluid valve means comprising a mechanically actuated valve means (CV) which is held open for fluid flow therethrough and is closed against fluid flow for controlling the actuating means (19) to selectively actuate and de-actuate the conveyor in response to the sensing of an article by the sensing member, said actuating means and said fluid valve means being operable at a single, predetermined, common fluid supply pressure, the method being characterised in that it comprises :

incorporating into said mechanically actuated valve means of the said zones normally open valves (CV$_1$ to CV$_4$), said sensing member (31) having a mechanical advantage of at least 2 :1 with respect to the operation of the respective valve whereby the conveyor is operable to convey discrete articles having a weight range of the lightest to the heaviest article of at least 0.45 Kg (1 lb) to 45 Kg (100 lb), said valves being maintained normally open by the pressure of the fluid conveyed to them,

passing fluid through one said normally open valve in a zone to the respective actuating means (18, 12, 23) to thereby actuate said conveying means (T1-T3) in the respective zone to convey articles therealong in said pass line,

and in response to sensing an article in the respective zone, selectively activating said normally open valve to a closed condition and thereby interrupting flow of fluid through said valve means to said actuating means.

## Ansprüche

1. Stauförderer zur selektiven Förderung und Stauung von Gegenständen dort entlang mit einer Vielzahl von Stauzonen, die eine gemeinsame Gegenstandspassierlinie definieren, jede Zone mit einer Vorrichtung zur Förderung von Gegenständen längs der Passierlinie, einer Vorrichtung zur selektiven Betätigung der Fördervorrichtung in der jeweiligen Zone und einer Vorrichtung zum Auffinden der Gegenwart einer Last in der jeweiligen Zone, welche ein Sensorelement umfasst, das sich nach oben in die Ebene des Förderers, der von der Passierlinie definiert wird, erstreckt, um Gegenstände, die in der jeweiligen Zone gefördert werden, abzufangen, und einer Flüssigkeitsventilvorrichtung, die durch das Sensorelement betätigt wird, während das letztgenannte von einem der Gegenstände abgelenkt wird, wobei die Flüssigkeitsventilvorrichtung ein Ventil umfasst, das zum Flüssigkeitsstrom dadurch offengehalten wird, und gegen Flüssigkeitsstrom zur Kontrolle der Betätigungsvorrichtung geschlossen wird, um den Förderer selektiv in Reaktion auf das Fühlen eines Gegenstandes durch das Sensorelement zu betätigen und nicht zu betätigen, wobei die Betätigungsvorrichtung und die Flüssigkeitsventilvorrichtung Teil einer jeweiligen Flüssigkeitskontrollvorrichtung bilden, die von einer gemeinsamen unter Druck stehenden Flüssigkeitsquelle bedienbar ist und bei einem einzelnen, vorbestimmten, gemeinsamen Flüssigkeitsversorgungsdruck selektiv bedienbar ist, um eine Vielzahl von diskreten Gegenständen zu fördern und zu stauen, dadurch gekennzeichnet, dass die Flüssigkeitsventilvorrichtung ein normalerweise offenes Ventil (CV) umfasst, welches in nicht aktiviertem Zustand durch den Druck der Flüssigkeit, die durch das Ventil fliesst, offen ist, und gegen Flüssigkeitsstrom geschlossen ist, wenn es zur Kontrolle der Betätigungsvorrichtung (18, 19, T1 bis T3) aktiviert wird, um die Fördervorrichtung (10) wenigstens teilweise in Reaktion auf das Fühlen der Gegenstände an vorbestimmten Stellen in der Passierlinie selektiv zu betätigen und nicht zu betätigen und dass das Sensorelement einen mechanischen Wirkungsgrad von wenigstens 2 :1 hinsichtlich des Betriebes des normalerweise offenes Ventils (CV) hat, wobei der Förderer betrieben werden kann, um diskrete Gegenstände, die einen Gewichtsbereich vom leichtesten bis zum schwersten Gegenstand von wenigstens 0,45 Kg (1 lb) bis 45 Kg (100 lb) haben.

2. Stauförderer nach Anspruch 1, weiterhin mit einer Bremsvorrichtung (25, 26) in jeder Zone, die auch von dem gemeinsamen Flüssigkeitsdrucksystem (51) betätigt wird, wobei die Fördervorrichtung, Betätigungsvorrichtung und das normalerweise offene Ventil mit der Bremsvorrichtung in jeder Zone zusammenwirken, um Gegenstände längs des Förderers zu stauen, wenn letztgenannter in einem Drucklosigkeitsstand ist.

3. Stauförderer nach Anspruch 1 oder 2, worin das normalerweise offene Ventil (CV) eine vorbestimmte Systemträgheit besitzt, die teils von dem gemeinsamen Flüssigkeitsdruck erzeugt wird, und worin das normalerweise offene Ventil von jedem der diskreten Gegenstände ohne Rücksicht auf sein Gewicht gegen die jeweilige Trägheit betrieben wird.

4. Stauförderer nach Anspruch 3, worin der gemeinsame Flüssigkeitsdruck eine Funktion des Gewichtes des schwersten geförderten und gestauten Gegenstandes ist.

5. Stauförderer nach Anspruch 1, worin der Förderer ein getriebener Staubremsrollenförderer mit Antriebsband B ist, einer Vielzahl von bandgetriebenen, lasttragenden Rollen R, die in einer Vielzahl von selektiv angetriebenen und gebremsten Stauzonen (Zone 1, Zone 2, Zone 3), die die gemeinsame Gegenstandspassierlinie definieren, angeordnet sind, Spannrollen (T1, T2, T3), um das Band selektiv in Eingriff mit lasttragenden Rollen der jeweiligen Zonen zu drängen, einer Flüssigkeitskontrollvorrichtung und Bremsvorrichtung (18, 19, 25) in jeder Zone zum selektiven Eingriff wenigstens einer lasttragenden Rolle in jede Zone ; und mit einer integrierten Flüssigkeitskreisvorrichtung (Fig. 2), die bei einem gemeinsamen Flüssigkeitsdruck von der unter Druck stehenden Flüssigkeitsquelle arbeitet, und die Flüssigkeitskontrollventile und die flüssigkeitsgetriebene Betätigungsvorrichtung bedienbar miteinander verbindet ; worin die Betätigungsvorrichtung in jeder Zone das Band selektiv in Eingriff mit lasttragenden Rollen in der jeweiligen Zone drängt, wenn das Flüssigkeitskontrollventil CV in der Zone normalerweise offen ist ; worin das Sensorelement einen gewölbten Halter 31 umfasst, der auf einer Schwenkwelle 24 zwischen zwei lasttragenden Rollen angebracht ist, und sich von der Schwenkwelle zwischen den beiden lasttragenden Rollen um eine der Rollen und nach oben in die Passierlinie von unter der einen lasttragenden Rollen erstreckt, wobei ein Arm 38, der auf der Schwenkwelle angebracht ist, um bedienbar in das normalerweise offene Flüssigkeitskontrollventil einzugreifen und das Ventil zu schliessen, wenn ein Gegenstand in der Passierlinie den Halter und die Welle dreht, wobei der Halter, die Schwenkwelle, und der Arm einen mechanischen Wirkungsgrad von wenigstens 2 hinsichtlich des Betriebes des Ventils durch den Gegenstand liefern.

6. Förderer nach einem der vorhergehenden Ansprüche mit Druckkontrollvorrichtungen zur Einstellung des Druckes der Flüssigkeit, die sowohl durch das normalerweise offene Ventil als auch durch die Betätigungsvorrichtungen der Stauzonen läuft.

7. Förderer nach Anspruch 5 oder Anspruch 6, wenn er an Anspruch 5 angehängt ist, worin die Betätigungsvorrichtung eine zweite Schwenkwelle 15 einschliesst, wenigstens einen Spannrollenstützhalter 14, der auf der zweiten Schwenkwelle angebracht ist, eine Spannrolle T, die auf dem Halter angebracht ist, einen flüssigkeitsgetriebenen Auslöser 19, der bedienbar angebracht ist, um die zweite Welle selektiv in eine Drehrichtung zur Drängung der Spannrolle gegen das Band und gegen eine getriebene Rolle zu drehen, und um selektiv Drehung der zweiten Welle in eine gegensinnige Drehrichtung zu gestatten, um den Kontakt des Bandes mit der getriebenen Rolle zu entlasten.

8. Förderer nach Anspruch 7, weiterhin mit einem ersten Antriebsarm 18, der auf der zweiten Schwenkwelle zur Drehung der zweiten Schwenkwelle angebracht ist, und worin der flüssigkeitsgetriebene Auslöser einen selektiv ausfahrbaren Kolben 20 einschliesst, der angeordnet ist, um in den ersten Antriebsarm einzugreifen und ihn zu drehen und um die zweite Schwenkwelle zu drehen.

9. Förderer nach Anspruch 7 oder 8, weiterhin mit einem Bremsarm 26, der auf der zweiten Schwenkwelle angebracht ist, um in einer getriebenen Rolle einzugreifen und sie zu bremsen, wenn der Auslöser betrieben wird, um Drehung der zweiten Schwenkwelle in die entgegengesetzte Drehrichtung zu gestatten.

10. Förderer nach Anspruch 8 oder Anspruch 9, wenn er an Anspruch 8 angehängt ist, worin die Flüssigkeitsbetätigungsvorrichtung in jeder Zone weiterhin eine Vielzahl von zweiten Schwenkwellen 15, 16, 17 mit Antriebsarmen 18, 21, 22 und Bandspannrollenstützhaltern 14 darauf einschliesst, und Bandspannrollen T1, T2, T3, die bedienbar auf den Haltern angebracht sind, und weiterhin mit Verbindungsvorrichtungen 23, 24, die gemeinsame die Vielzahl von Antriebsarmen mit dem ersten Antriebsarm verbinden.

11. Förderer nach Anspruch 7 oder einem daran angehängten Ansprüche, worin der Flüssigkeitsauslöser ein integrales Wechselventil mit zwei Einlassöffnungen (A und B) einschliesst und mit einem ausfahrbaren Kolben bedienbar verbunden ist.

12. Förderer nach Anspruch 9 oder einem daran angehängten Ansprüche, worin die Entfernung von dem Angriffspunkt des Flüssigkeitsauslösers mit dem Antriebsarm zu einer Drehachse der zweiten Schwenkwelle ungefähr die zweifache Entfernung von der Drehachse der zweiten Schwenkwelle zur Drehachse der Spannrolle ist.

13. Förderer nach Anspruch 12, wenn er an Anspruch 10 angehängt ist, worin die Entfernung zwischen der Anbringung jeder der Verbindungsvorrichtungen (23, 24) jeweils zu einem Antriebsarm und der Drehachse einer jeweiligen zweiten Schwenkwelle wenigstens ungefähr die zweifache Entfernung von der jeweiligen zweiten Schwenkwellendrehachse zu einer jeweiligen Drehachse einer jeweiligen Bandspannrolle ist.

14. Verfahren zum selektiven Fördern und Stauen einer Vielzahl von diskreten Gegenständen in einem Staufförderer mit einer Vielzahl von Stauzonen, die eine gemeinsame Gegenstandspassierlinie definieren, jede Zone mit einer Vorrichtung zum Fördern von Gegenständen, einer Vorrichtung zur selektiven Betätigung der Fördervorrichtung in der jeweiligen Zone und einer Vorrichtung zum Auffinden der Gegenwart einer Last in der jeweiligen Zone, welche ein Sensorelement und flüssigkeitsgetriebene Ventilvorrichtung umfasst, wobei sich das Sensorelement in die Ebene, die durch die Passierlinie definiert wird, erstreckt, um Gegenstände, die in der jeweiligen Zone gefördert werden, abzufangen, und die Flüssigkeitsventilvorrichtung durch das Sensorelement betätigt wird, während das letztgenannte von einem der Gegenstände abgelenkt wird, wobei die Flüssigkeitsventilvorrichtung eine mechanisch betätigte Ventilvorrichtung (CV) umfasst, die für den durchgehenden Flüssigkeitsstrom offengehalten wird, und gegen Flüssigkeitsstrom zur Kontrolle der Betätigungsvorrichtung (19) geschlossen wird, um den Förderer selektiv in Reaktion auf das Fühlen eines Gegenstandes durch das Sensorelement zu betätigen und nicht zu betätigen, wobei die Betätigungsvorrichtung und die Flüssigkeitsventilvorrichtung bei einem einzelnen, vorbestimmten, gemeinsamen Flüssigkeitsversorgungsdruck bedienbar sind, wobei das Verfahren dadurch gekennzeichnet ist, dass es folgendes umfasst :

Einbau von normalerweise offenen Ventilen (CV$_1$ bis CV$_4$) in die mechanisch betätigten Ventilvorrichtungen der Zonen, wobei die Sensorelemente (31) einen mechanischen Wirkungsgrad von wenigstens 2 : 1 hinsichtlich der Bedienung des jeweiligen Ventils haben, wobei der Förderer zum Fördern diskreter Gegenstände mit einem Gewichtsbereich vom leichtesten bis zum schwersten Gegenstand von wenigstens 0,45 Kg (1 lb) bis 45 Kg (100 lb) bedienbar ist, wobei die Ventile normalerweise durch den Druck der zu ihnen geförderten Flüssigkeit offengehalten werden,

Durchlass von Flüssigkeit durch eines der normalerweise offenen Ventile in einer Zone zu der jeweiligen Betätigungsvorrichtung (18, 12, 23), um damit die Fördervorrichtungen (T1-T3) in der jeweiligen Zone zur Förderung von Gegenständen dort entlang in der Passierlinie zu betätigen,

und, in Reaktion auf das Fühlen eines Gegenstandes in der jeweiligen Zone, selektive Betätigung des normalerweise offenen Ventils in einen geschlossenen Zustand, und damit Unterbrechung des Flüssigkeitsstroms durch die Ventilvorrichtung zur Betätigungsvorrichtung.

## Revendications

1. Convoyeur-accumulateur de transport sélectif et d'accumulation d'objets tout au long comportant plusieurs zones d'accumulation définissant une ligne commune de passage d'objet, chaque zone prévoyant des moyens de transport des objets au long de la ligne de passage, des moyens de commande sélective des moyens de transport dans la zone respective et des moyens capteurs de présence d'une charge dans la zone respective et des moyens capteurs capteurs de la présence d'une charge dans la zone respective comportant un capteur dressé dans le plan du convoyeur défini par la ligne de passage de manière à intercepter les articles ainsi transportés dans la zone respective et un dispositif régulateur à fluide commandé par ledit capteur lorsque celui-ci est dévié par un objet, ladite vanne à fluide prévoyant une vanne maintenue ouverte pour le passage du fluide et fermée contre l'écoulement du fluide à l'effet de régler les moyens pour la commande et l'immobilisation sélective du convoyeur en réponse à la détection d'un objet par ledit capteur, lesdits moyens de commande et ladite vanne à fluide formant un élément d'un dispositif régulateur de fluide activé à partir d'une source commune de fluide sous pression et selon une pression unique commune spécifique d'amenée pour le transport et l'accumulation d'une multitude d'objets discrets, caractérisé en ce que ledit dispositif régulateur fluide prévoit une vanne normalement ouverte (CV) restant ouverte à l'état non-activé par la pression du fluide passant par la vanne et fermée contre l'écoulement du fluide lors de sa manoeuvre pour régler lesdits moyens d'actionneur (18, 19, T1 à T3) pour la manoeuvre et l'arrêt sélectif des moyens de transport (10) au moins partiellement en réponse à la détection d'objets en des endroits prédéterminés de la ligne de passage, le dispositif capteur ayant l'avantage d'un rapport mécanique de 2 :1 par rapport au fonctionnement de la vanne normalement ouverte (CV), le convoyeur étant alors en mesure de transporter des objets discrets d'une fourchette de poids du plus léger au plus lourd entre 0,45kg (1 lb) et 45kg (100 lb).

2. Convoyeur-accumulateur suivant la revendication 1 comportant également des moyens de freinage (25, 26) en chaque zone également activé par ledit système commun de fluide de pression (51), lesdits moyens de convoyeur, moyens d'actionneur et la vanne normalement ouverte fonctionnant avec lesdits moyens de freinage en chaque zone pour accumuler les objets le long du convoyeur lorsque celui-ci est en mode de pression nulle.

3. Convoyeur-accumulateur suivant la revendication 1 ou la revendication 2, dont la vanne normalement ouverte (CV) compte une inertie de système prédéterminée relevant partiellement de ladite pression commune de fluide et la vanne normalement ouverte est commandée par chacun des objets discrets contre l'inertie respective sans égard à son poids.

4. Convoyeur-accumulateur suivant la revendication 3, dont la pression commune de fluide est fonction du poids de l'objet le plus lourd ainsi transporté et accumulé.

5. Convoyeur-accumulateur suivant la revendication 1, dont ledit convoyeur est une version de convoyeur-accumulateur freiné à rouleau dynamique ayant une bande de commande (B), une série de rouleaux porteurs (R) à commande par bande situés en une série de zones d'accumulation à commande et freinage (Zone 1, Zone 2, Zone 3, etc..) définissant la ligne commune de passage d'objets, des rouleaux tendeurs (T1, T2, T3) assurant l'engagement sélectif assisté de ladite bande avec les rouleaux-porteurs des zones respectives, des moyens régulateurs de pression et des moyens de freinage (18, 19, 25) en chaque zone pour l'engagement sélectif d'un minimum d'un rouleau-porteur en chaque zone ; et

des moyens de circuit intégré à fluide (Fig.2) fonctionnant à partir d'une source commune de fluide en pression et assurant le raccord fonctionnel desdites vannes de commande de fluide et desdits moyens actionneur à commande fluide ;

lesdits moyens d'actionneur en chaque zone pour l'engagement sélectif accéléré de la bande avec les rouleaux-porteurs de charge en zone respective, lorsque ladite vanne de commande (CV) de la zone est normalement ouverte ;

ledit moyen capteur comportant une bride cambrée (31) montée sur axe pivotant (34) entre deux rouleaux-porteurs de charge et disposé depuis ledit axe pivotant entre les deux rouleaux-porteurs, autour d'un desdits rouleaux, et remontant dans ladite ligne de passage depuis ledit rouleau-porteur de charge, une pale (38) étant montée sur ledit axe pivotant pour assurer l'engagement fonctionnel avec la vanne de commande de fluide normalement ouverte et la fermeture de ladite vanne lorsqu'un objet sur ladite ligne de passage fait tourner ladite bride et ledit axe, lesdits éléments de bride, axe pivotant et pale assurant un avantage mécanique d'au moins 2 par rapport à la commande de ladite valve par ledit objet.

6. Convoyeur-accumulateur selon l'une des revendications antérieures, comportant des moyens régulateur de pression pour ajuster la pression du fluide envoyé vers les moyens à vanne normalement ouverte et les moyens d'activation desdites zones d'accumulation.

7. Convoyeur suivant la revendication 5 ou la revendication 6 associée avec la revendication 5, dont les moyens d'activation prévoient un deuxième axe pivotant (15), au moins une bride de support (14) de rouleau tendeur montée sur ledit deuxième axe pivotant, un rouleau-tendeur (T) monté sur ladite bride, un dispositif d'activation à commande fluide (19) monté fonctionnel pour la rotation sélective dudit deuxième axe en sens rotatif de manière à pousser ledit rouleau-tendeur contre ladite bande et vers un rouleau dynamique et pour permettre la rotation sélective dudit deuxième axe en sens opposé pour écarter le contact de ladite bande avec ledit rouleau dynamique.

8. Convoyeur suivant la revendication 7, comportant aussi une première pale de commande (18) montée sur ledit deuxième axe pivotant pour la rotation dudit deuxième axe pivotant et dont le dispositif d'activation à commande fluide prévoit un piston à extension sélective (20) assurant l'engagement et la rotation de ladite première pale de commande et la rotation dudit deuxième axe pivotant.

9. Convoyeur suivant la revendication 7 ou la revendication 8, comportant aussi un bras de freinage (26) monté sur le deuxième axe pivotant permettant l'engagement et le freinage d'un rouleau dynamique lorsque ledit actionneur est manoeuvré pour la rotation du deuxième axe pivotant en sens opposé de rotation.

10. Convoyeur suivant la revendication 8 ou la revendication 9 associée avec la revendication 8, dont lesdits moyens actionneur fluide en chaque zone comportent également une série de deuxièmes axes pivotants (15, 16, 17) ayant des pales de commande (18, 21, 22) avec des brides de support de rouleau tendeur(14), et des rouleaux-tendeurs (T1, T2, T3) montés fonctionnels sur lesdites brides, et comportant également des moyens de liaison (23, 24) raccordant ladite série de pales de commande avec ladite première pale de commande.

11. Convoyeur suivant la revendication 7 ou toute revendication associée dont l'actionneur à fluide comporte une vanne alternante intégrale ayant deux opercules d'amenée (A et B) et raccordée fonctionnelle avec un piston extensible.

12. Convoyeur suivant la revendication 9 ou toute revendication associée dont la distance entre le point d'engagement dudit actionneur fluide avec ladite pale de commande et l'axe de rotation dudit deuxième axe pivotant est environ 2 fois la distance entre ledit axe de rotation dudit deuxième axe pivotant et l'axe de rotation dudit rouleau-tendeur.

13. Convoyeur suivant la revendication 12 associée à la revendication 10 dont respectivement la distance entre la fixation de chaque moyen de liaison (23, 24) avec une pale de commande, et l'axe de rotation du deuxième axe pivotant respectif, est au moins 2 fois la distance entre les axes respectifs de rotation du deuxième axe pivotant et du rouleau-tendeur de bande.

14. Procédé sélectif de transport et d'accumulation d'une série d'objets sur un convoyeur-accumulateur du modèle comportant une série de zones d'accumulation définissant une ligne commune de passage, chaque zone ayant des moyens de transport d'objets, des moyens de manoeuvre sélective des moyens convoyeurs dans la zone intéressée, et des moyens de détection de la présence d'une charge dans la zone intéressée comportant un élément capteur et des moyens à vanne à fluide, l'élément capteur étant dressé dans le plan défini par la ligne de passage de manière à intercepter les objets transportés dans la zone intéressée et les moyens à vanne actionnée par le capteur lors de sa déviation par ledit objet, lesdits moyens à vanne à fluide comportant des moyens à vanne à commande mécanique (CV) tenue ouverte pour le passage du fluide et fermée contre l'écoulement du fluide pour régler les moyens actionneurs (19) à l'effet du fonctionnement sélectif en mode manoeuvre et arrêt du convoyeur en réponse à un objet capté, lesdits moyens actionneurs et de vanne à fluide étant manoeuvrés selon la pression source commune unique prédéterminée d'une amenée, le procédé étant caractérisé en ce qu'il comprend :

incorporant dans les moyens de ladite vanne à fonctionnement mécanique desdites zones des vannes normalement ouvertes ($CV_1$ à $CV_4$), ledit moyen capteur (31) ayant un avantage mécanique d'au moins 2 :1 par rapport au fonctionnement de la vanne respective, le convoyeur fonctionnant pour transporter des objets discrets d'une fourchette de poids du plus léger au plus lourd entre 0,45kg (1 lb) et 45kg (100 lb), ladite vanne étant maintenue ouverte par la pression du fluide ainsi véhiculé

le passage de fluide par une vanne normalement ouverte dans une zone aux moyens actionneurs (18, 12, 23) respectifs, afin de commander lesdits moyens convoyeurs (T1-T3) de ladite zone pour transporter les objets dans ladite ligne de passage,

et en réponse à l'objet capté dans la zone respective, ladite vanne normalement ouverte étant commandée de manière sélective en position de fermeture, interrompant ainsi l'écoulement du fluide par ladite vanne vers lesdits moyens actionneurs.

**FIG.1**

**FIG.2**

FIG. 3

FIG. 4